# NEUE EUROPÄISCHE PATENTSCHRIFT

(11) **EP 0 202 356 B2**
(45) Veröffentlichungstag und Bekanntmachung des Hinweises auf die Entscheidung über den Einspruch: **08.09.1993**
(45) Hinweis auf die Patenterteilung: 16.03.1988
(21) Anmeldenummer: 85106432.9
(22) Anmeldetag: 24.05.1985
(51) Int. Cl.: B65G 53/60

(54) **Fördereinrichtung**
Conveyor device
Dispositif de transport

(43) Veröffentlichungstag der Anmeldung: 26.11.1986
(73) Patentinhaber: Motan Plast-Automation AG, Ch-6330 Cham (CH)
(72) Erfinder: Kramer, Walter, CH-6330 Cham (CH)
(74) Vertreter: Kohl, Karl-Heinz

(56) Entgegenhaltungen:
- DE-A- 3 323 162
- DE-B- 2 032 993
- FR-A- 365 110

## Beschreibung

Die Erfindung betrifft eine Fördereinrichtung nach dem Oberbegriff des Anspruches 1.

Eine Fördereinrichtung dieser Art ist aus der DE-A-33 23 162 bekannt. Bei dieser Fördereinrichtung ist der Abscheidebehälter in eine Bypassleitung der Förderleitung eingebaut, die an das Sauggerät angeschlossen ist. Die Ausfallklappe ist unmittelbar an die Bypassleitung angeschlossen und gegen diese Leitung abgedichtet. Der Abscheidebehälter besteht aus einem Deckel- und einem Unterteil, die durch ein Filter getrennt sind, das verhindert, daß die abgeschiedenen Metallteilchen in den Deckelteil und über diesen in die Förderleitung gelangen können.

Bei einer anderen bekannten Fördereinrichtung (DE-B-20 32 993) ist der Metallabscheider in einem Gehäuse untergebracht, das zwei Austrittsöffnungen aufweist und in dem ein Leitrohr schwenkbar gelagert ist. Durch die eine Austrittsöffnung des Gehäuses gelangt das Transportgut in eine nachfolgende Verarbeitungsmaschine. Befindet sich im Förderstrom ein Metallteilchen, wird das Leitrohr im Gehäuse verschwenkt, so daß das mit den Metallteilchen verunreinigte Transportgut durch die andere Austrittsöffnung aus dem Gehäuse herausfallen kann. Der Metallabscheider mit dem Gehäuse ist in Förderrichtung hinter dem Auffangbehälter bzw. hinter dem Vorratsbehälter so angeordnet, daß das zu reinigende Transportgut ohne ein Fördermedium im freien Fall nach unten durch das Leitrohr und den Metallabscheider fällt. Darum setzt die Reinigung des Transportgutes von Metallteilchen eine Fallstrecke für das Transportgut voraus. Das gereinigte Transportgut wird entweder direkt einem Verbraucher oder einem Zwischenbehälter zugeführt, aus dem es verschiedenen Verbrauchern zugeführt werden kann. Im letzten Fall ist aber ein zweites Fördergerät notwendig, um das gereinigte Transportmedium vom Zwischenbehälter den verschiedenen Verbrauchern zuführen zu können. Eine mit dieser Fördereinrichtung versehene Anlage ist darum konstruktiv aufwendig und teuer.

Der Erfindung liegt die Aufgabe zugrunde, die gattungsgemäße Fördereinrichtung so auszubilden, daß bei konstruktiv einfacherAusbildung ein geringer Platzbedarf erforderlich ist und die Abdichtung der Ausfallklappe entfällt.

Diese Aufgabe wird bei der gattungsgemäßen Fördereinrichtung erfindungsgemäß mit den kennzeichnenden Merkmalen des Anspruches 1 gelöst.

Bei der erfindungsgemäßen Ausbildung ist der Abscheidebehälter unmittelbar in die Förderleitung integriert, so daß eine Bypassleitung entfällt. Dadurch ist eine einfache und preisgünstige Leitungsführung gewährleistet. Da die Ausfallklappe und die Ausfallöffnung innerhalb des von der Förderleitung durchsetzten Abscheidebehälters liegen, muß die Ausfallklappe nicht abgedichtet werden. Bei einer zweiteiligen Ausbildung des Abscheidebehälters kann ein Filter entfallen, so daß die Herstellungs- und Montagekosten verringert werden können. Vor allem aber wird eine hohe Förderleistung und damit ein hoher Wirkungsgrad der erfindungsgemäßen Fördereinrichtung sichergestellt. Die abzuscheidenden Verunreinigungen können auf kürzestem Weg und entsprechend kurzer Zeit entfernt werden, so daß dadurch der Transport des übrigen gereinigten Transportgutes nicht nennenswert unterbrochen wird. Dadurch gewährleistet die erfindungsgemäße Fördereinrichtung eine maximale Förderleistung bei äußerst einfacher konstruktiver Ausbildung. Die Fördereinrichtung ist wenig störanfällig, da keine Dichtungsprobleme auftreten, also bei Verwendung eines Saugfördergerätes das erforderliche Vakuum nicht mehr zusammenfallen kann.

Weitere Merkmale der Erfindung ergeben sich aus den weiteren Ansprüchen, der Beschreibung und den Zeichnungen. Die Erfindung wird nachstehend anhand mehrerer in den Zeichnungen dargestellter Ausführungsbeispiele näher beschrieben. Es zeigt:
Fig 1 eine erfindungsgemäße Fördereinrichtung mit einer Förderleitung, die durch einen Abscheidebehälter eines Metallabscheiders hindurchgeführt ist und eine Ausfallklappe aufweist,
Fig. 2 den Abscheidebehälter nach Fig. 1 mit der Förderleitung in vergrößerter Darstellung,
Fig. 3 bis 9 jeweils eine andere Ausführungsform des Metallabscheiders in Darstellungen entsprechend Fig. 2.

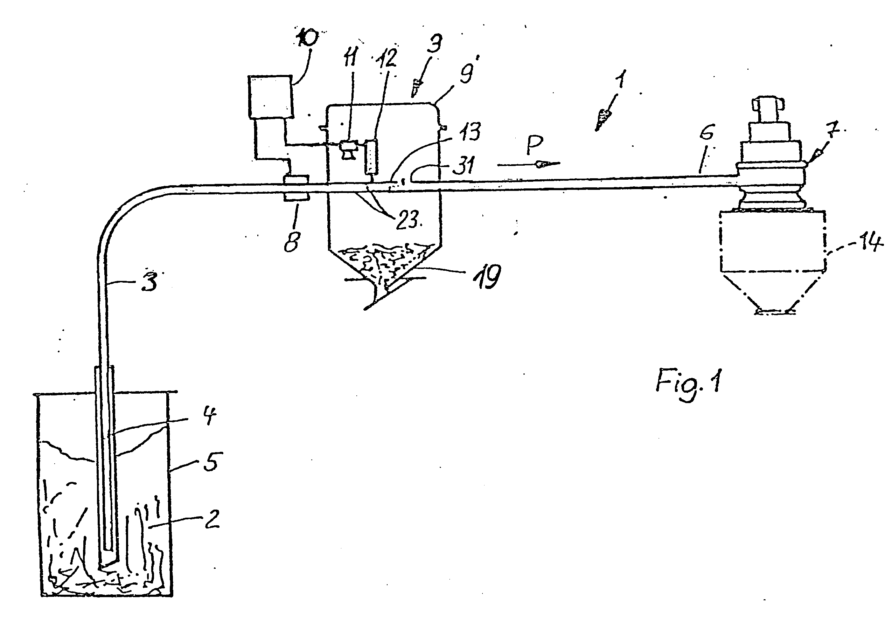

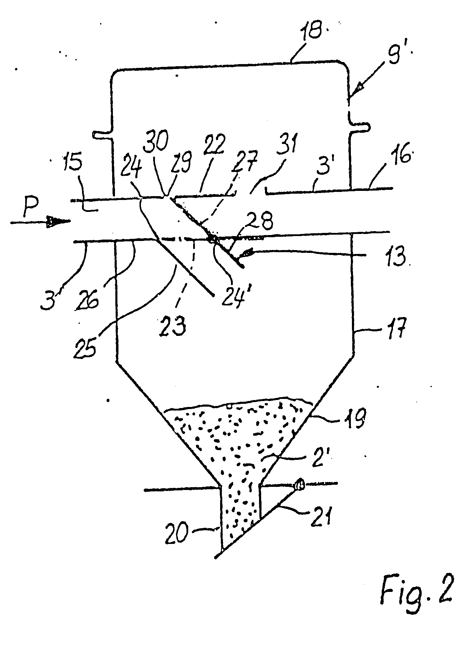

Die Fördereinrichtung 1 nach Fig. 1 dient zum Absaugen von granulatförmigen Transportgut 2, wie beispielsweise Kunststoffgranulat, Glas, Reis, Mehl, Zucker oder anderen nicht metallischen Materialien. Die Fördereinrichtung 1 weist eine Förderleitung 3 auf, die mit einem Ende 4 in einen das Transportgut 2 enthaltenden Vorratsbehälter 5 ragt und mit ihrem anderen Ende 6 an ein Sauggerät 7 angeschlossen ist. Zwischen den Enden 4 und 6 ist an die Förderleitung 3 eine Induktionsspule 8 eines Metallabscheiders 9 angeschlossen. Mit dem Metallabscheider 9 sollen im Transportgut 2 enthaltene metallische Verunreinigungen 2' entfernt werden können (Fig. 2).

Der Metallabscheider 9 besteht ferner aus einer an die Induktionsspule angeschlossenen elektrischen oder elektronischen Steuervorrichtung 10, einem Magnetventil 11, einem Stellteil 12 für eine mit der Förderleitung 3 verbundenen Ausfallklappe 13 sowie einem Abscheidebehälter 9'.

Der Steiiteii 12 ist vorzugsweise als Kolben-Zylinder-Vorrichtung ausgebildet und mit der Ausfallklappe 13 verbunden. Wenn der im Bereich der Induktionsspule 8 vorbeiströmende Transportgutstrom Metallteilchen enthält, wird die Induktionsspule erregt, wodurch sie an die Steuereinrichtung 10 ein Signal weitergibt. Dadurch wird über die Steuereinrichtung 10 das Magnetventil 11 betätigt, das auf den Stellteil 12 wirkt. Durch Betätigten des Stellteiles wird die Ausfallklappe 13 so verstellt, daß die Förderleitung 3 in Transportrichtung P unterbrochen und der Transportgutstrom 2 seitlich so abgelenkt wird, daß er in den Ausscheidebehälter 9' austritt. Dadurch kann der mit den Metallteilchen verunreinigte Transportgutstrom auf einfache Weise aus dem übrigen Transportgutstrom ausgesondert und so entfernt werden, daß das ein einem mit dem Sauggerät 7 verbundenen Auffangbehälter 14 aufgefangene Transportgut vollständig gereinigt ist, also keine Metallteilchen mehr enthält. Nachdem das verunreinigte Transportgut in der oben beschriebenen Weise ausgesondert werden ist, verschließt die Ausfallklappe 13 vorzugsweise durch einen vorgegebenen Zeitimpuls selbsttätig eine Ausfallöffnung 23 in der Förderleitung 3, während sie in bezug auf den transportierten Transportgutstrom in eine Freigabestellung zurückschwenkt, in der sie die Unterbrechung der Förderleitung 3 wieder aufhebt. Der Transportgutstrom kann dann in Transportrichtung P weiter zum Auffangbehälter 14 transportiert werden.

Um das Transportgut 2 über das Sauggerät 7 einwandfrei absaugen zu können, ist der Abscheidebehälter 9' in bekannter Weise vakuumdicht ausgebildet, wobei Durchtrittsöffnungen 15 und 16 (Fig. 2) für die Förderleitung 3 sowie eine Unter- und Deckelteil 17 und 18 des Abscheidebehälters 9' über (nicht dargestellte) Dichtungen abgedichtet sind.

Wie Fig. 2 zeigt, ist die Förderleitung 3 durch den Behälterunterteil 17 geführt, der vorzugsweise wesentlich höher ist als der Deckelteil 18. Der Behälterunterteil weist ferner einen trichterförmigen Endabschnitt 19 auf, der in einen Auslaufstutzen 20 mündet, der durch eine Klappe 21 verschließbar ist.

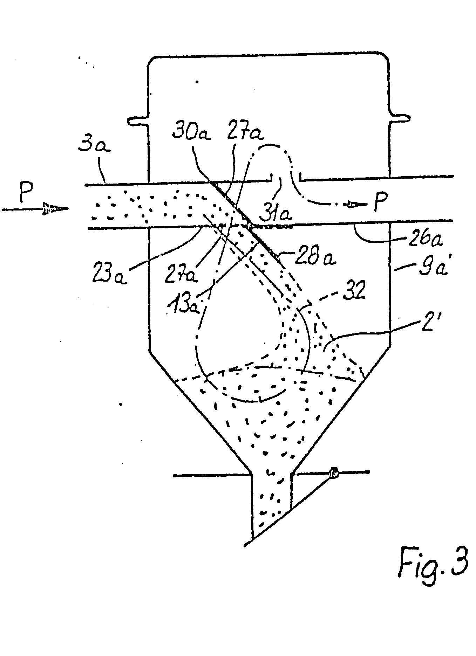

Gemäß Fig. 2 weist der im Abscheidebehälter 9' liegende Rohrabschnitt 22 der Förderleitung 3 die nach unten in den Abscheidebehälter mündende Ausfallöffnung 23 auf, durch die das verunreinigte Fördergut 2' ausgesondert wird. An den in Transportrichtung P rückwärtigen Rand 24 der Ausfallöffnung 23 schließt ein Ablenkblech 25 an, das unter einem stumpfen Winkel zur Längsachse der Förderleitung 3 nach unten ragt. Am gegenüberliegenden Öffnungsrand 24' ist die Ausfallklappe 13 angelenkt. Sie besteht aus einem zweiarmigen Blechstreifen. Der eine Klappenarm 27, der den Leitungsquerschnitt in Schließstellung der Ausfallklappe 13 verschließt, ist länger als der andere Klappenarm 28. Der Klappenarm 27 erstreckt sich in Freigabestellung (strichpunktierte Linien in Fig. 2) über die ganze Länge der Ausfallöffnung 23 und verschließt sie, während der andere Klappenarm 28 an der Unterseite 26 der Förderleitung 3 anliegt. Das freie Ende 29 des Klappenarmes 27 ragt in Schließstellung der Ausfallklappe durch einen schmalen Querschlitz 30 in derWandung der Förderleitung 3. Der Querschlitz 30 verläuft senkrecht zur Transportrichtung P und hat eine Länge, die nur geringfügig größer ist als die Breite der Ausfallklappe 13 bzw. ihres Armes 27. Durch den Querschlitz 30 ist vermieden, daß in Schließstellung der Ausfallklappe 30 mit Metallteilchen verunreinigtes Transportgut 2' oder Metallteilchen zwischen das freie Ende 29 des Klappenarmes 27 und die Rohrwandung der Förderleitung 3 eingeklemmt werdem kann, das beim Öffnung der Ausfallklappe wieder in den Transportgutstrom und dann ungehindert in den Auffangbehälter 14 gelangen könnte. In Transportrichtung P ist hinter der Ausfallklappe in der Förderleitung 3 eine Lufteinströmöffnung 31 vorgesehen, die vorzugsweise in der oberen, dem Deckelteil 18 zugewandten Rohrwandungshälfte 3' vorgesehen ist. Über die Lufteinströmöffnung 31 kann Saugluft aus dem Abscheidebehälter 9' in die Förderleitung 3 zurückströmen. Diese Saugluft gelangt beim Abschalten des verunreinigten Transportgutstromes in den Abscheidebehälter 9', in den sie, wie in Fig. 3 mit strichpunktierten Linien angedeutet ist, nach oben steigt und dann über die Öffnung 31 aus dem Abscheidebehälter in die Förderleitung 3 entweicht, wo sie in Transportrichtung P weiterströmt.

Die Ausfallklappe 13 braucht gegenüber der Förderleitung 3 nicht abgedichtet zu sein, da innerhalb des Abscheidebehälters 9' gleiche Druckverhältnisse wie in der Förderleitung 3 herrschen. Die Förderleitung 3 kann - abweichend von dieser Ausführungsform - auch durch den Deckelteil 18 hindurchgeführt sein, so daß ein größerer Auffangraum für das verunreinigte Transportgut zur Verfügung steht. Anstelle des Sauggerätes 7 (Fig. 1) kann auch eine Druckluftzuführvorrichtung vorgesehen sein, so daß das Transportgut mit Druckluft in Richtung P in den Auffangbehälter 14 transportiert wird. In diesem Fall ist der Metallabscheider 9 mit der Ausfallklappe - entsprechend wie bei der Ausführungsform nach Fig. 2 - in der Förderleitung 3 angeordnet und entsprechend ausgebildet. Bei einer solchen Einrichtung ist wiederum in der Förderleitung 3 eine der Öffnung 31 entsprechende Lufteinstömöffnung vorgesehen, über die die Druckluft aus dem Abscheidebehälter in die Förderleitung zurückströmen kann.

Der Stellteil zum Betätigen der Ausfallklappe 13 kann außer durch die Kolbenzylindervorrichtung beispielsweise auch durch bekannte Drehmagnete, Membranzylinder oder ähnliche Vorrichtungen gebildet sein. Beim Vakuumbetrieb bzw. der Saugförderung, wie sie mit dem Sauggerät 7 nach Fig. 1 erreicht wird, wird die Ausfallklappe 13 durch den herrschenden Unterdruck geschlossen, während sie beim Transport des Transportgutes mittels Druckluft gegen den im Abscheidebehälter herrschenden Überdruck geschlossen werden muß. Hierzu eignen sich als Stellglieder wieder beispielsweise Drehmagnete, Kolbenzylindervorrichtungen und dgl. Sobald die Ausfallklappe 13 über die Steuereinrichtung 10, das Magnetventil 11 und den Stellteil 12 in die Schließstellung verschwenkt worden ist, wird der nachströmende Transportguntstrom 2' an derAusfallklappe abgelenkt, so daß er durch die Ausfallöffnung 23 aus der Förderleitung 3 austritt und längs des Ablenkbleches 25 und des Klappenarmes 28 in den Abscheidebehälter 9' geleitet wird.

Die Ausführungsform nach Fig. 3 unterscheidet sich von der oben beschriebenen Ausführungsform nur dadurch, daß kein Ablenkblech vorgesehen ist und daß die Klappenarme 27a und 28a der Ausfallklappe 13a in verschiedenen Ebenen liegen. Die Förderleitung 3a weist folglich nur die untere Ausfallöffnung 23a, die Öffnung 30a und/die obere Lufteintrittsöffnung 31a auf. In der Freigabestellung verschließt der Klappenarm 27a die Ausfallöffnung 23a, während er in der Schließstellung den Strömungsquerschnitt der Förderleitung 3a verschließt. Wie beim vorigen Ausführungsbeispiel dient der andere Klappenarm 28a in der Freigabestellung als Anschlag für die Ausfallklappe und in deren Schließstellung als Ablenkteil für das abgelenkte Transportgut. Aus der Ausfallöffnung 23a fällt das verunreinigte Transportgut 2' nach unten (vgl. den geraden Abschnitt der strichpunktierten Bahn 32), wobei es am unteren Klappenarm 28a abgelenkt wird. Die mit diesem Transportgutstrom in den Abscheidebehälter 9a' gelangende Luft strömt dann mit der strichpunktierten Bahn 32 nach oben und wird dann oberhalb der Förderleitung 3a nach unten umgelenkt, wobei sie in die Lufteintrittsöffnung 31a gelangt und in Transportrichtung P in der Förderleitung weiter zum Sauggerät und dem Auffangbehälterströmt. Die Klappenarme 27a und 28a liegen in zueinander parallelen Ebenen, die nur etwa um die Dicke der Rohrwandung gegeneinander versetzt sind, so daß der Klappenarm 27a in Freigabestellung derAusfallklappe 13a (gestrichelte Linien in Fig. 3) mit der Unterseite 26a der Rohrwandung fluchtet.

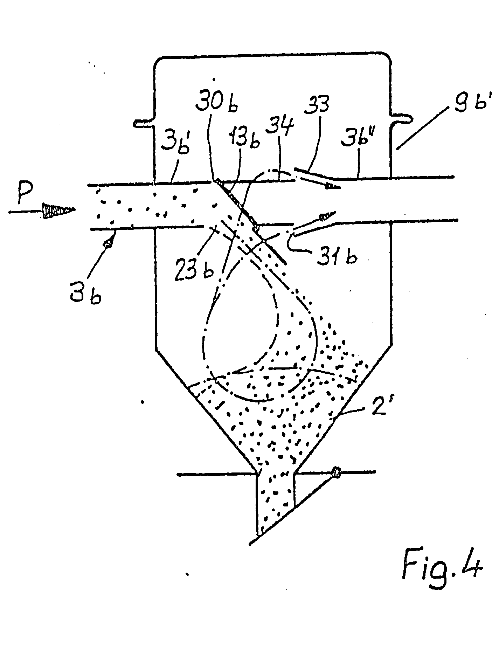

Von diesem Ausführungsbeispiel unterscheidet sich die Fördereinrichtung 1 b gem. Fig. 4 dadurch, daß die Lufteintrittsöffnung 31 nicht durch einen Schlitz oder einen ähnlichen Durchbruch im oberen Teil der Rohrwandung, sondern durch einen Ringspalt zwischen zwei Rohrteilen 3b' und 3b" gebildet ist. Bei dieser Ausführungsform ist die Förderleitung 3b durch die beiden innerhalb des Abscheidebehälters 9b' mit geringem Abstand hintereinanderliegenden Rohrteile gebildet. Der erste, in Transportrichtung P rückwärtige Rohrteil 3b' weist die Ausfallöffnung 23b, den gegenüberliegenden Querschlitz 30b und die Ausfallklappe 13b auf, die gleich ausgebildet ist wie bei der vorigen Ausführungsform. Das rückwärtige Ender 33 des zweiten Rohrteiles 3b" ist konisch erweitert, so daß zwischen diesen Rohrenden 33 und dem vorderen Rohrende 34 des ersten Rohrteiles 3b' der Ringspalt 31 b verbleit, der die Lufteinströmöffnung bildet. Der Spalt darf jedoch nicht zu groß sein, damit keine Teilchen des Transportgutes durch den Spalt hindurchfallen können. Bei kleinem Spalt werden die Teilchen infolge ihrer Trägheit mit dem Transportgut mitgerissen, so daß sie über den Spalt hinweg in den zweiten Rohrteil 3b" gelangen. Hierbei wirkt sich vorteilhaft aus, daß sich das Rohrende 33 entgegen Transportrichtung P erweitert, so daß die Gefahr zusätzlich verringert ist, daß Transportgutteilchen durch den Ringspalt 31 b nach außen gelangen.

Über den Ringspalt 31 b kann die im Abscheidebehälter 9b' enthaltene Luft in das zweite Förderrohrteil 3b" auustreten und dann in Transportrichtung P weiterströmen (strichpunktierte Linien in Fig. 4). Diese Ausführungsform ist durch den Wegfall eines Schlitzes, der nachträglich in die Leitung geschnitten werden muß, einfach und kostengünstig ausgebildet.

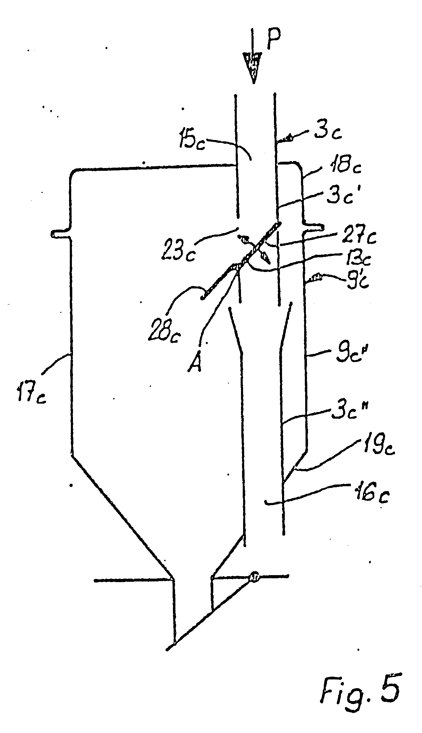

Bei der Ausführungsform nach Fig. 5 ist die Förderleitung 3c vertikal im Abscheidebehälter 9c' angeordnet. Sie verläuft parallel zur Behälterachse und benachbart zu einer Längsseitenwand 9c" des Abscheidebehälters. Im übrigen entspricht diese Ausführungsform jedoch der Ausführungsform nach Fig. 4.

Der erste Rohrteil 3c' ragt durch eine Öffnung 15c im Deckelteil 18c, während der zweite Rohrteil 3c" durch eine Öffnung 16c im trichterförmigen Endabschnitt 19c des Ascheidebehälters 9c' hindurchgeführt ist. Der erste Rohrteil ist so angeordnet, daß die Schwenkachse A der Ausfallklappe 13c geringfügig unterhalb der Anschlußebene der Behälterteile 17c und 18c liegt, so daß zur Aufnahme des auszusondernden Transportgutes im Abscheidebehälter 9c' ein relativ großer Raum zur Verfügung steht.

Die vertikale Einbaulage der Förderleitung 3c hat den Vorteil, daß die auszuscheidenden Metallteilchen besonders einfach und wirksam unterAusnutzung ihrer Schwerkraft ausgeschieden werden können. In der dargestellten Schließstellung der Ausfallklappe 13c fallen die Metallteilchen zunächst auf den in der Förderleitung 3c liegenden Klappenarm 27c und gleiten dann auf ihm durch die Ausfallöffnung 23c über den zweiten Klappenarm 28c nach außen, bis sie schließlich im freien Fall im Abscheidebehälter 9c' nach unten fallen.

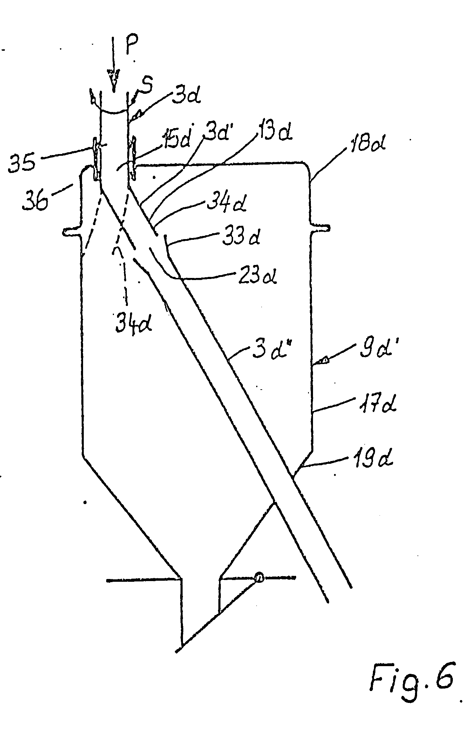

Entsprechend werden auch die Metallteilchen bei der Ausführungsform nach Fig. 6 unter dem Einfluß ihrer Schwerkraft aus geschieden, da hier die Förderleitung 3d ebenfalls von oben nach unten in den Abscheidebehälter 9d' geführt ist. Sie tritt wiederum in den Deckelteil 18d ein und am Endabschnitt 19d des Behälterunterteiles 17d aus, mit dem Unterschied, daß die Förderleitung 3d innerhalb des Abscheidebehälters 9d' schräg, vorzugsweise von einer Seite zur gegenüberliegenden, verläuft. Der erste Rohrteil 3d' ist als Winkelrohr bzw. Rohrknie ausgebildet, das mit seinem einen Winkelstück 35 drehbar in der Öffnung 15d des Deckelteiles 18d gehalten ist. Das andere Rohrstück 13d bildet die Ausfallklappe und liegt vollständig innerhalb des Abscheidebehälters 9d' bzw. dessen Deckelteiles 18d. Sein freies Ende 34d, das die Ausfallöffnung 23d bildet, liegt etwa in Höhe der Anschlußebene zwischen dem Deckel- und Unterteil 18d und 17d. Der zweite Rohrteil 3d" mit dem konischen Ende 33d ragt wesentlich weiter- bis etwa in Höhe der Anschlußebene zwischen dem Deckel- und Unterteil - in den Abscheidebehälter 9d'.

Das Winkelstück 35 ist mit solchem Abstand vom Rand 36 des Deckelteiles 13d angeordnet, daß es zum Abscheiden der Metallteilchen gegenüber der dargestellten Förderstellung so weit nach der einen oder anderen Seite (vgl. Pfeil S) verdreht worden kann, daß sein freies Ende 34d außerhalb einer gedachten Verlängerung des zweiten Rohrteiles 3d" liegt und dann die mit gestrichelten Linien angedeutete Lage einnimmt. Dadurch ist gewährleistet, daß die Metallteilchen frei nach unten in den Abscheidebehälter 9d' fallen können, ohne daß die Gefahr besteht, daß sie in den zweiten Rohrteil 3d" gelangen. Diese Ausführungsform ist konstruktiv sehr einfach und preisgünstig, da die Ausfallklappe durch das vorhandene erste Rohrteil 3d' selbst gebildet ist, also eine gesonderte Ausfallklappe und damit Herstellung und Montage entfallen. Wie bei der zuvor beschriebenen Ausführungsform erweitert sich das Rohrende 33d des zweiten Rohrteiles 3d" entgegen Transportrichtung P.

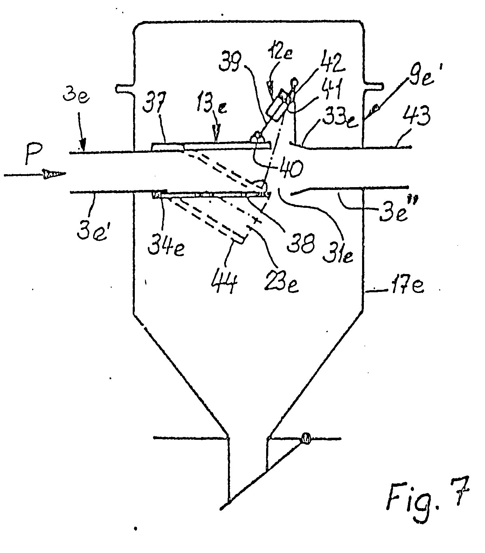

Die Ausführungsformen nach den Fig. 7 bis 9 entsprechen weitgehend der Ausführungsform nach Fig. 4 mit dem Unterschied, daß ihre Ausfallklappen 13e bis 13g aus einem flexiblen Rohrstück bestehen, das auf einem der Rohrteile 3e', 3f" bzw. 3g' befestigt ist.

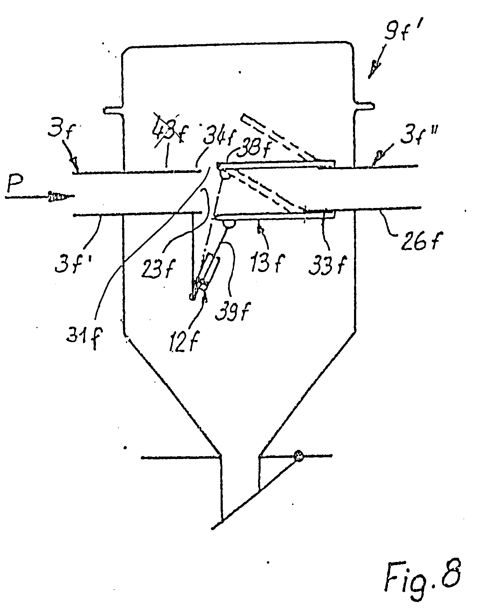

Gem. Fig. 7 ist die Ausfallklappe 13e ein Schlauchstück, das mit seinem rückwärtigen Ende 37 auf das vordere Rohrteilende 34e gesteckt ist. Die Ausfallklappe 13e liegt in Freigabestellung (ausgezogene Linien) koaxial zum ersten Rohrteil 3e'. Ihr vorderes Ende 38 liegt wie bei der zuvor beschriebenen Ausführungsform nach Fig. 8 mit geringem axialem Abstand vom benachbarten entgegen Transportrichtung P konisch erweiterten Ende 33e des zweiten Rohrteiles 3e". Dadurch kann die Ausfallklappe 13e, ohne am zweiten Rohrteil 3e" anzustoßen, in die mit gestrichelten Linien dargestellte Schließstellung gedrückt werden. Vorzugsweise ist der Abstand des Klappenendes 38 vom Rohrende 33e größer als der Durchmesser des größten zu erwartenden Transportgutteilchens, um zu vermeiden, daß Transportgutteilchens in den Ringspalt 31e zwischen den Enden 38 und 33e eingeklemmt werden. Der Ringspalt 31e hat außerdem den Vorteil, daß über ihn die beim Ablenken der Metallteilchen in den Abscheidebehälter 9e' gelangende Luft austreten kann, wobei sie in den zweiten Rohrteil 3e" strömt. Der Stellteil 12e ist vorzugsweise als Kolben- und Zylindervorrichtung ausgebildet, die mit dem freien Ende der Kolbenstange 39 an einer Anlenklasche 40 oder dgl. der Ausfallklappe 13e und mit ihrem Zylinder 41 an einer Stange 42 oder einem ähnlichen Halteteil angelenkt ist. Sie ist stehend auf dem rückwärtigen konischen Ende 33a des zweiten Rohrteiles 3e" befestigt, vorzugsweise verschweißt.

Die horizontale Förderleitung 3e liegt, wie bei der Ausführungsform nach Fig. 4, im Behälterunterteil 17e. Der Stellteil 12e ist vorzugsweise auf der Oberseite 43 des ersten und zweiten Rohrteiles 3e' und 3e" befestigt. Beim Erregen der Induktionsspule (Fig. 1) wird über die Steuervorrichtung 10 der Stellteil 12e betätigt, wobei seine Kolbenstange 39 ausgefahren wird. Dadurch wird die Ausfallklappe 13e nach unten wird in die mit gestrichelten Linien dargestellte Lage elastisch gebogen. In dieser Stellung liegt die durch das freie Ende 44 der Ausfallklappe 13e gebildete Ausfallöffnung 23e unterhalb des Endes 33e des zweiten Rohrteiles 3e", so daß das auszuscheidende Transportgut frei nach unten in den Abscheidebehälter 9e' fallen kann.

Die Ausführungsform nach Fig. 8 unterscheidet sich nur dadurch von dem zuvor beschriebenen Ausführungsbeispiel, daß die Ausfallklappe 13f auf den zweiten Rohrteil 3f" aufgeschoben ist, dessen rückwärtiges Ende 33f nicht konisch erweitert ist, sondern gleichen lichten Querschnitt wie der übrige Rohrteil hat. Die Lufteintrittsöffnung 31f ist durch den Ringspalt zwischen dem freien Ende 34f und 38f des ersten Rohrteiles 3f' und der Ausfallklappe 13f gebildet. Ferner ist der Stellteil 12f nicht an der Oberseite, sondern an der Unterseite 26f der Rohrteile 3f' und 3f" angelenkt. Dadurch wird die Ausfallklappe 13f beim Ausfahren der Kolbenstange 39f des Stellteiles 12f nach oben in die mit gestrichelten Linien dargestellte Schließstellung elastisch gebogen.

Die Ausführungsformen nach den Fig. 7 und 8 haben den Vorteil, daß sie konstruktiv sehr einfach und preiswert sind, da kein Ablenkblech erforderlich ist, die Ausfallklappe lediglich aufgeschoben, also nicht angelenkt werden muß und zudem eine einfaches billiges Bauteil ist.

Bei der Ausführungsform nach Fig. 8 entfällt außerdem das konische Rohrende, so daß dieser Metallabscheider 9f' konstruktiv noch weiter vereinfacht ist. In Schließstellung der Ausfallklappe 13f fällt das Transportgut über die Ausfallöffnung bzw. die vordere Öffnung 23f des ersten Rohrteiles 3f' nach unten in den Abscheidebehälter 9f', während die hierbei in den Abscheidebehälter gelangende Luft über die Ausfallklappe 13f in die Förderleitung 3f zurückströmt. Die Ausfallklappe 13f dient also nicht nur zum Ausscheiden von Metallteilchen, sondern auch als Einströmstutzen, über den die im Abscheidebehälter enthaltene Luft in die Förderleitung 3f zurückströmen kann. Diese Ausbildungen eignen sich auch zum vertikalen Einbau in den Abscheidebehälter.

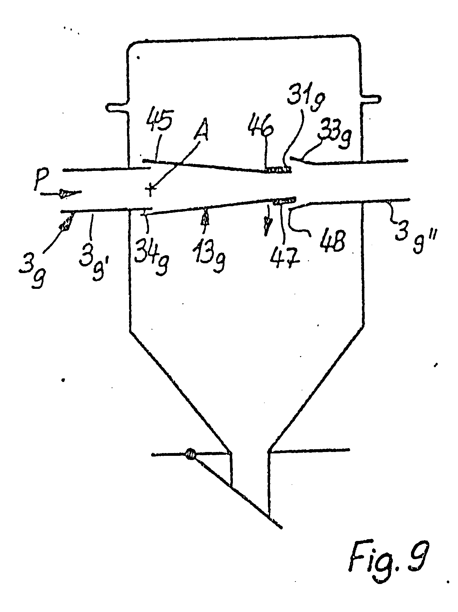

Bei der Ausführungsform nach Fig. 9 besteht die Ausfallklappe 13g wiederum aus einem flexiblen Rohrstück, das aber nicht nur lose auf eines der Rohrteile 3g', 3g" gesteckt, sondern am ersten Rohrteil 3g' um eine feststehende Achse A schwenkbar angelenkt ist. Die Ausfallklappe 13g ist konisch ausgebildet. Ihr entgegen Transportrichtung P erweitertes Rohrende 45 erstreckt sich über das zugehörige Ende 34g des ersten Rohrteiles 3g', während das andere, in Transportrichtung vordere Rohrende 46 wesentlich kleinere lichte Weite aufweist und vom benachbarten konischen Ende 33g des zweiten Rohrteiles 3g" Abstand hat. Auf das Rohrende 46 ist ein flexibles kurzes Schlauchstüch 47 gesteckt, das sich in der dargestellten Freigabestellung der Ausfallklappe 13g bis in die Nähe einer die Stirnseite 48 des zweiten Rohrteiles 3g" enthaltenden Ebene erstreckt. Dadurch wird der Ringspalt 31g zwischen der Ausfallklappe 13g und dem zweiten Rohrteil 3g" überbrückt, so daß unbeabsichtigt keine Transportgutteilchen während des Transportes zum Auffangbehälter 14 (Fig. 1) nach unten aus der Förderleitung 3g fallen können.

## Patentansprüche

1. Fördereinrichtung für ein im wesentlichen granulatförmiges Transportgut, mit einer an ein Fördergerät (7) zum Transport mit einem Fördermedium, insbesondere ein Saugförder- oder Druckluftgerät, angeschlossenen Förderleitung (3), die an einen Vorratsbehälter (5) angeschlossen ist und mit der das Transportgut (2) durch das Fördermedium vom Vorratsbehälter (5) zu einem Auffangbehälter (14) förderbar ist, mit einem Metallabscheider (9) mit einer Induktionsspule (8), einer Steuereinrichtung (10) und einer mit der Förderleitung (3) verbundenen Ausfallklappe (13) und mit einer mit einem Abscheidebehälter (9') verbundenen Ausfallöffnung (23) für mit Metallteilchen verunreinigtes Transportgut (2'), dadurch gekennzeichnet, daß die Ausfallklappe (13) und die Ausfallöffnung (23) innerhalb des Abscheidebehälters (9') liegen, und daß die Förderleitung (3) durch den Abscheidebehälter (9') verläuft und in ihrem innerhalb des Abscheidebehälters (9') verlaufenden Abschnitt mindestens eine Öffnung (31) zur Rückführung des Fördermediums aus dem Abscheidebehälter (9') in die Förderleitung (3) aufweist.

2. Einrichtung nach Anspruch 1, bei der der Metallabscheider eine mit der Steuereinrichtung verbundenes Magnetventil und ein Stellteil zum Betätigen der Ausfallklappe aufweist, dadurch gekennzeichnet, daß das Magnetventil (11) und/oder der Stollteil (12) innerhalb des Abscheidebehälters (9') liegen.

3. Einrichtung nach Anspruch 1 oder 2, dadurch gekennzeichnet, daß die Öffnung (31, 31a) durch einen Schlitz in der Wandung der Förderleitung (3) gebildet ist.

4. Einrichtung nach einem der Ansprüche 1 bis 3, dadurch gekennzeichnet, daß die Öffnung (31 b) durch einen Spalt, vorzugsweise einen Ringspalt, zwischen einem ersten und einem zweiten Rohrteil (3b' und 3b") der Förderleitung (3b) gebildet ist (Fig. 4 bis 6).

5. Einrichtung nach Anspruch 4, dadurch gekennzeichnet, daß das rückwärtige Ende (33) des in Transportrichtung (P) des Transportgutes (2) vorderen Rohrteiles (3b") trichterförmig erweitert ist und das benachbarte Ende (34) des ersten Rohrteiles (3b') unter Bildung des Spaltes (31) mit Abstand umgibt (Fig. 4).

6. Einrichtung nach einem der Ansprüche 1 bis 5, dadurch gekennzeichnet, daß die Förderleitung (3) quer, vorzugsweise senkrecht, zur Achse des Abscheidebehälters (9') verläuft (Fig. 2 bis 4, 7 bis 9).

7. Einrichtung nach einem der Ansprüche 1 bis 6, bei der der Abscheidebehälter aus einem Unterteil und einem Deckelteil besteht, dadurch gekennzeichnet, daß die Förderleitung (3) unterhalb des Deckelteiles (18) durch das Unterteil (17) hindurchgeführt ist (Fig. 2 bis 4, 7 bis 9).

8. Einrichtung nach einem der Ansprüche 1 bis 7, dadurch gekennzeichnet, daß die Förderleitung (3c) parallel zur Achse des Abscheidebehälters (9c') verläuft (Fig. 5).

9. Einrichtung nach einem der Ansprüche 1 bis 7, dadurch gekennzeichnet, daßdie Förderleitung (3d) im Abschneidebehälter (9d') schräg, vorzugsweise unter einem Winkel von etwa 45°, zur Achse des Abscheidebehälters (9d') verläuft (Fig. 6).

10. Einrichtung nach Anspruch 9, dadurch gekennzeichnet, daß die Förderleitung (3d) an einer Seite des Abscheidebehälters (9d') in den Deckelteil (18d) mündet und auf der gegenüberliegenden Seite aus dem Behälterunterteil (17d) austritt (Fig. 6).

11. Einrichtung nach einem der Ansprüche 1 bis 10, dadurch gekennzeichnet, daß der erste Rohrteil (3d') durch eine Winkelrohr gebildet ist, das vorzugsweise mit einem Winkelstück (35) drehbar in Deckelteil (18d) des Abscheidebehälters (9'd) gehalten ist.

12. Einrichtung nach Anspruch 11, dadurch gekennzeichnet, daß die Ausfallklappe (13d) durch das andere Winkelstück des ersten Rohrteiles (3d') gebildet ist (Fig. 6).

13. Einrichtung nach einem der Ansprüche 1 bis 12, dadurch gekennzeichnet, daß die Ausfallklappe (13e bis 13g) durch ein flexibles Rohrstück, vorzugsweise einen Schlauch gebildet ist (Fig. 7 bis 9).

14. Einrichtung nach Anspruch 13, dadurch gekennzeichnet, daß die Ausfallklappe (13e, 13f) auf das erste und/oder zweite Rohrteil (3e', 3e"; 3f', 3f") gesteckt ist (Fig. 7, 8).

15. Einrichtung nach Anspruch 13 oder 14, dadurch gekennzeichnet, daß die Öffnung (31e, 31f) durch eine schmalen axialen Spalt zwischen der Ausfallklappe (13e, 13f) und dem mit Abstand gegenüberliegenden Rohrteil (3e", 3f') gebildet ist (Fig. 7, 8).

16. Einrichtung nach einem der Ansprüche 13 bis 15, dadurch gekennzeichnet, daß das zweite Rohrteil (3f") über seine ganze Länge gleiche lichte Weite hat (Fig. 8).

17. Einrichtung nach einem der Ansprüche 13 bis 16, dadurch gekennzeichnet, daß der Stellteil (12e, 12f) an einen Halteteil (42) angelenkt ist, der am freien Ende (33e) des einen Rohrteiles (3e", 3f') befestigt ist (Fig. 7, 8).

18. Einrichtung nach einem der Ansprüche 1 bis 17, dadurch gekennzeichnet, daß der Stellteil (12e, 12f) mit einem Stellglied (39, 39f) am anderen Rohrteil (3e', 3f"), vorzugsweise an einer Lasche (40), angelenkt ist (Fig. 7, 8).

19. Einrichtung nach Anspruch 18, dadurch gekennzeichnet, daß der Stellteil (12f) an der Unterseite (26f) der Förderleitung (3f) vorgesehen ist (Fig. 8).

20. Einrichtung nach einem der Ansprüche 1 bis 19, dadurch gekennzeichnet, daß die Ausfallklappe (13g) schwenkbar am einen, vorzugsweise dem ersten Rohrteil (3g'), befestigt ist (Fig. 9).

21. Einrichtung nach Anspruch 20, dadurch gekennzeichnet, daß die Ausfallklappe (13g) konisch ausgebildet ist und sich in Förderrichtung (P) verjüngt (Fig. 9).

22. Einrichtung nach Anspruch 20 oder 21, dadurch gekennzeichnet, daß auf das freie, kleinere lichte Weite aufweisende Ende (46) der Ausfallklappe (13g) eine vorzugsweise gleichen lichten Querschnitt aufweisendes Schlauchstück (47) geschoben ist (Fig. 9).

23. Einrichtung nach Anspruch 22, dadurch gekennzeichnet, daß die Öffnung (31g) zwischen dem freien Ende des Schlauchstückes (47) und dem gegenüberliegenden konisch erweiterten Ende (33g) des zweiten Rohrteiles (3g") gebildet ist.

## Claims

1. Conveyor system for an essentially granulate-like conveyed material, with a conveyor pipe-line (3) attached to a conveying device (7) for transportation with a conveying medium, in particular a suction conveying device or a compressed air device, which conveyor pipe-line (3) is connected to a storage container (5) and by which the conveyed material (2) can be conveyed by the conveying medium from the storage container (5) to a collecting container (14), with a metal separator (9) with an induction coil (8), a control device (10) and a discharge valve (13) connected to the conveyor pipe-line (3), and with a discharge opening (23) - connected to a separation container (9') - for conveyed material (2') contaminated with metal particles, characterised in that the discharge valve (13) and the discharge opening (23) lie within the separation container (9') and that the conveyor pipe-line (3) runs through the separation container (9') and, in its section running inside the separation container (9'), has at least one opening (31) for returning the conveying medium from the separation container (9') into the conveyor pipe-line (3).

2. System according to Claim 1, in which the metal separator has a solenoid valve connected to the control device and an operating element for actuating the discharge valve, characterised in that the solenoid valve (11) and/or the operating element (12) lie within the separation container (9').

3. System according to Claim 1 or 2, characterised in that the opening (31, 31a) is formed by a slot in the wall of the conveyor pipe-line (3).

4. System according to one of Claims 1 to 3, characterised in that the opening (31 b) is formed by a gap, preferably an annular gap, between a first and a second pipe section (3b' and 3b") of the conveyor pipe-line (3b) (Figures 4 to 6).

5. System according to Claim 4, characterised in that the rear end (33) of the front - in the direction of transport (P) of the conveyed material (2) - pipe section (3b") is widened in the form of a funnel and encircles the adjacent end (34) of the first pipe section (3b') at a distance, thereby forming the gap (31) (Figure 4).

6. System according to one of Claims 1 to 5, characterised in that the conveyor pipe-line (3) runs at an angle, preferably perpendicularly, to the axis of the separation container (9') (Figures 2 to 4, 7 to 9).

7. System according to one of Claims 1 to 6, in which the separation container consists of a lower part and a cover part, characterised in that the conveyor pipe (3) is guided below the cover part (18) through the lower part (17) (Figures 2 to 4, 7 to 9).

8. System according to one of Claims 1 to 7, characterised in that the conveyor pipe-line (3c) runs parallel to the axis of the separation container (9c')(Figure 5).

9. System according to one of Claims 1 to 7, characterised in thatthe conveyor pipe-line (3d) in the separation container (9d') runs at an angle, preferably at an angle of about 45°, to the axis of the separation container (9d') (Figure 6).

10. System according to Claim 9, characterised in that the conveyor pipe-line (3d) runs into the cover part (18d) on one side of the separation container (9d') and emerges from the lower part (17d) of the container on the opposite side (Figure 6).

11. System according to one of Claims 1 to 10, characterised in that the first pipe section (3d') is made in the form of a pipe elbow, which is preferably held by an angle section (35) in a rotatable manner in the cover part (18d) of the separation container (9'd).

12. System according to Claim 11, characterised in that the discharge valve (13d) is formed by the other elbow section of the first pipe section (3d'). (Figure 6).

13. System according to one of Claims 1 to 12, characterised in that the discharge valve (13e to 13g) is formed by a piece of flexible pipe, preferably flexible tubing (Figures 7 to 9).

14. System according to Claim 13, characterised in that the discharge valve (13e, 13f) is fitted on the first and/or second pipe section (3e', 3e"; 3f', 3f") (Figures 7, 8).

15. System according to Claim 13 or 14, characterised in that the opening (31e, 31f) is formed by a narrow axial gap between the discharge valve (13e, 13f) and the pipe section (3e", 3f')lying opposite at a distance. (Figures 7, 8).

16. System according to one of Claims 13 to 15, characterised in that the second pipe section (3f") has the same inside width over its entire length. (Figure 8).

17. System according to one of Claims 13 to 16, characterised in thatthe operating element (12e, 12f) is linked to a holding part (42), which is attached to the free end (33e) of one of the pipe sections (3e", 3f'). (Figures 7, 8).

18. System according to one of Claims 1 to 17, characterised in thatthe operating element (12e, 12f) is attached by an operating member (39, 39f) to the other pipe section (3e', 3f"), preferably to a lug (40). (Figures 7, 8).

19. System according to Claim 18, characterised in that the operating element (12f) is provided on the underside (26f) of the conveyor pipe-line (3f). (Figure 8).

20. System according to one of Claims 1 to 19, characterised in that the discharge valve (13g) is attached in a rotatable manner to a pipe section, preferably the first pipe section (3g'). (Figure 9).

21. System according to Claim 20, characterised in that the discharge valve (13g) has a conical shape and tapers in the conveying direction (P). (Figure 9).

22. System according to Claim 20 or 21, characterised in that a piece of tubing (47), preferably having a uniform inside cross-section, is pushed onto the free end (46) of the discharge valve (13g), which has the smaller inside width. (Figure 9).

23. System according to Claim 22, characterised in that the opening (31g) is formed between the free end of the piece of flexible tubing (47) and the opposite, conically widened end (33g) of the second pipe section (3g").

## Revendications

1. Dispositif d'extraction pour une matière à transporter sous une forme essentiellement granuleuse, comprenant une conduite d'extraction (3) raccordée à un extracteur (7) pour le transport au moyen d'un fluide porteur, en particulier un extracteur à succion ou un appareil à air comprimé, qui est raccordée à un réservoir (5) et au moyen de laquelle la matière (2) peut être transportée par le fluide porteur du réservoir (5) à un collecteur(14), ainsi qu'un séparateur de métal (9) avec une bobine de self (8), un dispositif de commande (10) et un volet de sortie (13) relié à la conduite d'extraction (3) et avec une ouverture de sortie (23) communiquant avec un réservoir de séparation (9') pour des matières (2') à transporter contaminées par des particules métalliques, caractérisé en ce que le volet de sortie (13) et l'ouverture de sortie (23) se situent à l'intérieur du réservoir de séparation (9'), et que la conduite d'extraction (3) s'étend à travers le réservoir de séparation (9') et présente, dans sa section située à l'intérieur du réservoir de séparation (9'), au moins une ouverture (31) pour le retour du fluide porteur du réservoir de séparation (9') dans la conduite d'extraction (3).

2. Dispositif selon la revendication 1 dans lequel le séparateur de métal comprend une électrovanne reliée au dispositif de commande et un organe de commande pour l'actionnement du volet de sortie, caractérisé en ce que l'électrovanne (11) et/ou l'organe de commande (12) se situent à l'intérieur du réservoir de séparation (9').

3. Dispositif selon l'une des revendications 1 ou 2, caractérisé en ce que l'ouverture (31, 31a) est constituée par une fente dans la paroi de la conduite d'extraction (3).

4. Dispositif selon l'une quelconque des revendications 1 à 3, caractérisé en ce que l'ouverture (31 b) est constituée par une fente, de préférence une fente annulaire, entre une première et une deuxième section de tube (3b' et 3b") de la conduite d'extraction (3b) (fig. 4 à 6).

5. Dispositif selon la revendication 4, caractérisé en ce que l'extrémité postérieure (33) de la section du tube (3b"), antérieure dans la direction de transport (P) des matières à transporter (2), est évasée en entonnoir et qu'elle entoure à distance l'extrémité contiguë (34) de la première section du tube (3b'), avec la formation d'une fente (31) (fig. 4).

6. Dispositif selon l'une quelconque des revendications 1 à 5, caractérisé en ce que la conduite d'extraction (3) s'étend transversalement, de préférence perpendiculairement, à l'axe du réservoir de séparation (9') (fig. 2 à 4, 7 à 9).

7. Dispositif selon l'une quelconque des revendications 1 à 6 dans lequel le réservoir de séparation se compose d'une partie inférieure et d'une partie de couvercle, caractérisé en ce que la conduite d'extraction (3) traverse la partie inférieure (17), en dessous du couvercle (18) (fig. 2 à 4, 7 à 9).

8. Dispositif selon l'une quelconque des revendications 1 à 7, caractérisé en ce que la conduite d'extraction (3c) s'étend parallèlement à l'axe du résevoir de séparation (9c')(fig. 5).

9. Dispositif selon l'une quelconque des revendications 1 à 7, caractérisé en ce que la conduite d'extraction (3d) s'étend, à l'intérieur du réservoir de séparation (9d'), en oblique, de préférence sous un angle d'environ 45°, par rapport à l'axe du réservoir de séparation (9d') (fig. 6).

10. Dispositif selon la revendication 9, caractérisé en ce que la conduit d'extraction (3d) débouche, d'un côté du réservoir de séparation (9d'), dans le couvercle (18d) et qu'elle sort du côté opposé de la partie inférieure (17d) du réservoir (fig. 6).

11. Dispositif selon l'une quelconque des revendications 1 à 10, caractérisé en ce que la première section de tube (3d') est constituée par un coude qui, de préférence, est maintenu avec une partie du coude (35) dans le couvercle (18d) du résevoir de séparation (9d') de façon à pouvoir tourner.

12. Dispositif selon la revendication 11, caractérisé en ce que le volet de sortie (13d) est constitué par l'autre partie du coude de la première section du tube (3d') (fig. 6).

13. Dispositif selon l'une quelconque des revendications 1 à 12, caractérisé en ce que le volet de sortie (13e à 13g) est constitué par une section de tube flexible, de préférence par un tuyau souple (fig. 7 à 9).

14. Dispositif selon la revendication 13, caractérisé en ce que le volet de sortie (13e, 13f) est emmanché sur la première et/ou la deuxième section de tube (3e', 3e"; 3f', 3f") (fig. 7, 8).

15. Dispositif selon l'une des revendications 13 ou 14, caractérisé en ce que l'ouverture (31e, 31f) est constituée par une étroite fente axiale entre le volet de sortie (13e, 13f) et la section de tube (3e", 3f') disposée à distance en face de celui-ci (fig. 7, 8).

16. Dispositif selon l'une quelconque des revendications 13 à 15, caractérisé en ce que la deuxième section de tube (3f") présente un diamètre intérieur constant sur toute sa longueur (fig. 8).

17. Dispositif selon l'une quelconque des revendications 13 à 16, caractérisé en ce que l'organe de commande (12e, 12f) est articulé sur un organe de fixation (42) lequel est fixé à l'extrémité libre (33e) d'une section de tube (3e", 3f') (fig. 7, 8).

18. Dispositif selon l'une quelconque des revendications 1 à 17, caractérisé en ce que l'organe de commande (12e, 12f) est articulé avec un élément de réglage (39, 39f) sur l'autre section de tube (3e', 3f"), de préférence sur une attache (40) (fig. 7, 8).

19. Dispositif selon la revendication 18, caractérisé en ce que l'organe de commande (12f) est prévu à la face inférieure (26f) de la conduite d'extraction (3f) (fig. 8).

20. Dispositif selon l'une quelconque des revendications 1 à 19, caractérisé en ce que le volet de sortie (13g) est monté sur l'une des sections de tube, de préférence sur la première section de tube (3g'), de façon à pouvoir pivoter (fig. 9).

21. Dispositif selon la revendication 20, caractérisé en ce que le volet de sortie (13g) présente une forme conique et se rétrécit dans la direction de transport (P) (fig. 9).

22. Dispositif selon l'un des revendications 20 ou 21, caractérisé en ce que l'extrémité libre (46) du volet de sortie (13g) avec un diamètre intérieur plus faible est emmanché un tuyau flexible (47) présentant, de préférence, le même diamètre intérieur (fig. 9).

23. Dispositif selon la revendication 22, caractérisé en ce que l'ouverture (31 g) est formée entre l'extrémité libre du tuyau flexible (47) et l'extrémité contiguë (33g) à évasement conique de la deuxième section de tube (3g").
